# EUROPÄISCHE PATENTSCHRIFT

(11) **EP 0 577 585 B1**
(45) Veröffentlichungstag und Bekanntmachung des Hinweises auf die Patenterteilung: **18.09.1996**
(21) Anmeldenummer: 93890103.0
(22) Anmeldetag: 19.05.1993
(51) Int. Cl.: B60S 3/00, F16B 5/06

(54) **Verwendung einer Vorrichtung als Einrichtung zum Reinigen von kontaminiertem Gerät**
Use of a device for cleaning contaminated machinery
Utilisation d'un dispositif pour nettoyer des machines contaminées

(30) Priorität: 02.07.1992 AT 1353/92
(43) Veröffentlichungstag der Anmeldung: 05.01.1994
(73) Patentinhaber: Haager, Birgit, A-1050 Wien (AT)
(72) Erfinder: Haager, Birgit, A-1050 Wien (AT)
(74) Vertreter: Rippel, Andreas, Dipl.-Ing.

(56) Entgegenhaltungen:
- EP-A- 0 363 751
- AU-B- 517 179
- CA-A- 968 502
- CH-A- 599 747
- DE-A- 3 818 036
- FR-A- 2 570 422
- US-A- 3 648 303

## Beschreibung

Die Erfindung bezieht sich auf die Verwendung einer Vorrichtung als Einrichtung zum Reinigen von kontaminiertem Gerät, z.B. Kraftfahrzeugen, Flugzeugen od. dgl.

Wenn Kraftfahrzeuge, Flugzeuge, Panzer usw. aus einem durch Gifte oder Strahlen irgendwelcher Art verseuchtem Gebiet kommen, müssen sie gereinigt, dekontaminiert werden. Die bei einer solchen Reinigung anfallende Flüssigkeit, meist Wasser, darf selbstverständlich nicht in den Boden eindringen, sondern muß aufgefangen und entsprechend entsorgt werden.

Aus der FR-A-2 570 422 ist eine Vorrichtung mit einer Wanne bekannt geworden, die einen im Abstand vom Erdboden durch Ständer gehaltenen Rahmen aus zusammensteckbaren Stangen oder Rohren aufweist, über die eine die Wände und den Boden der Wanne bildende, im Bodenbereich am Erdboden aufliegende Kunststoffolie gelegt und daran befestigt ist.

Die bekannte Vorrichtung soll z.B als Flüssigkeitsbehälter im Freien oder als Schwimmbassin verwendet werden. Insbesondere bei einer Verwendung für militärische Zwecke soll in die Wanne ein Behälter gestellt werden, der im Falle einer Beschädigung der Wanne Brennstoff auffangen kann. Eine Verwendung zur Reinigung von kontaminiertem Gerät wird in diesem Dokument nicht vorgeschlagen.

In der EP-A-0 363 751 ist eine Vorrichtung zum Waschen jeglicher mit umweltschädlichen Stoffen kontaminierter Fahrzeuge und Geräte zu Hause beschrieben. Die bekannte Vorrichtung weist eine aus einem Folienmaterial bestehende Wanne auf, die mit mindestens einer Abflußöffnung und einem Schmutzabscheider, insbesondere einem Ölabscheider versehen ist. Die bekannte Vorrichtung ist schon deshalb aufwendig, weil die Abflußöffnung mit dem Anschluß an den Schmutzabscheider bzw. die Kanalisation eine fabriksmäßige Vorfertigung der Kunststoffolie verlangt. Überdies ist eine Ableitung des Waschwassers in die Kanalisation bei der Reinigung von Geräten, die aus einem durch Gifte oder Strahlen irgendwelcher Art verseuchtem Gebiet kommen, nicht zulässig.

Die Erfindung hat es sich zum Ziel gesetzt, eine Vorrichtung mit einer Wanne mit einem im Abstand vom Erdboden durch Ständer gehaltenen Rahmen aus zusammensteckbaren Stangen oder Rohren, über die eine die Wände und den Boden der Wanne bildende, im Bodenbereich am Erdboden aufliegende Kunststoffolie gelegt und daran befestigt ist, als Einrichtung zum Reinigen von kontaminiertem Gerät, z.B. Kraftfahrzeugen, Flugzeugen od. dgl., verwendbar zu machen. Eine solche Einrichtung soll zerlegbar und einfach aufstellbar sein, sie soll auch für große Geräte, wie Flugzeuge, brauchbar sein und trotzdem höchste Sicherheit gegen eine Kontaminierung der Umgebung des Aufstellortes bieten.

Erreicht wird dies dadurch, daß beim Einfahren des Gerätes der Rahmen vorerst auf einer Seite nicht aufgestellt wird, wobei die Kunststoffolie direkt von einer Rolle abgezogen und auf den Rahmen aufgelegt bzw. in diesen eingelegt wird, sodaß das Gerät ein- und auf die Kunststoffolie auffahren kann, worauf die Wanne durch Aufstellen der letzten Seite des Rahmens und Auflegen der Kunststoffolie geschlossen wird, und ferner die bei der Reinigung anfallende kontaminierte Flüssigkeit mit einer Pumpe in entsprechende Entsorgungsbehälter abgezogen wird.

Es hat sich gezeigt, daß zur Bildung einer erfindungsgemäßen Einrichtung schon billige Kunststoffolien geeignet sind, die in Rollen angeliefert und direkt von der Rolle abgezogen und auf den Rahmen aufgelegt bzw. in diesen eingelegt werden.

Eine besonders einfache Befestigung der Kunststoffolie am Rahmen wird erreicht, wenn die Kunststoffolie mittels federnder Klemmen, die an ihrer Innenseite zweckmäßig mit einem reibungserhöhenden Belag versehen sind, an den Stangen oder Rohren befestigt wird.

Um die Aufstellung einer erfindungsgemäßen Einrichtung möglichst zu vereinfachen und zu sichern, daß die Klemmen an den richtigen Stellen angebracht werden, werden zweckmäßig die Klemmen mittels eines flexiblen Organes, z.B. einer Kette, an vorbestimmten Stellen mit den Stangen oder Rohren verbunden.

Eine bevorzugte Verwendung zeichnet sich dadurch aus, daß die Balken etwa T-förmiger Ständer auf den Boden gestellt und die Stangen oder Rohre durch am Steg des 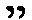 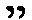 T 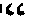 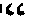 angeordnete Klemmen befestigt werden.

Nachstehend ist die Erfindung anhand eines in den Zeichnungen dargestellten Ausführungsbeispieles näher beschrieben, ohne jedoch auf dieses Beispiel beschränkt zu sein. Dabei zeigen: Fig. 1 in schematischer Ansicht einen in einer erfindungsgemäß verwendeten Einrichtung stehenden Lastkraftwagen; Fig. 2 die Seitenansicht einer erfindungsgemäß verwendeten Einrichtung mit schematisch angedeuteten Rädern eines darin stehenden Fahrzeuges, wobei die eine Rahmenseite noch nicht geschlossen ist; Fig. 3 ebenfalls die Seitenansicht einer Einrichtung mit den zur Bildung des Rahmens verwendeten Rohren im Schnitt, und Fig. 4 in schaubildlicher Ansicht eine zur Befestigung der Folie dienende Klemme.

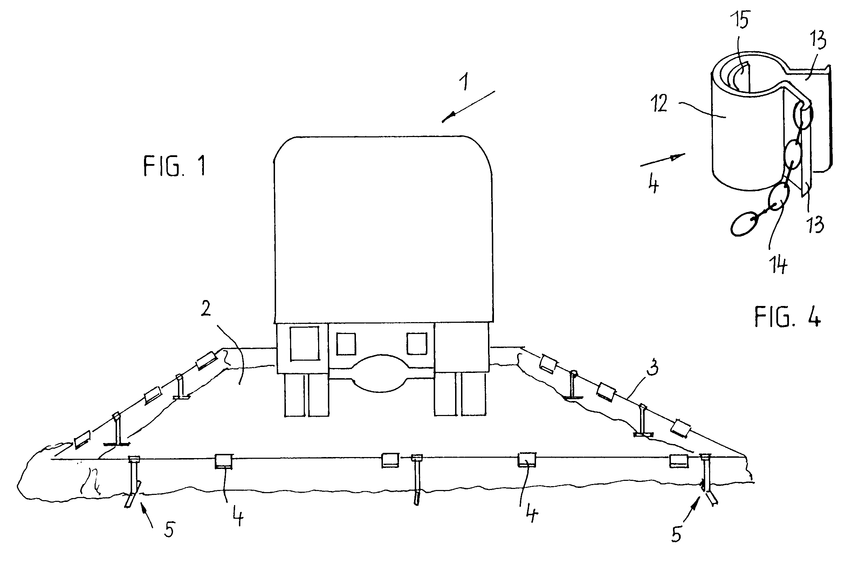

Gemäß Fig. 1 steht ein LKW 1 auf einer am Erdboden aufliegenden Kunststoffolie 2, die mit ihren Rändern über einen aus Stangen oder Rohren 3 gebildeten Rahmen gelegt und an diesem mittels Klemmen 4 befestigt ist. Die Folie 2 wird dabei in der Zeichnung als durchsichtig angenommen.

Der aus den Stangen oder Rohren 3 gebildete Rahmen wird von Ständern 5 getragen, d.h. in einem Abstand vom Erdboden gehalten.

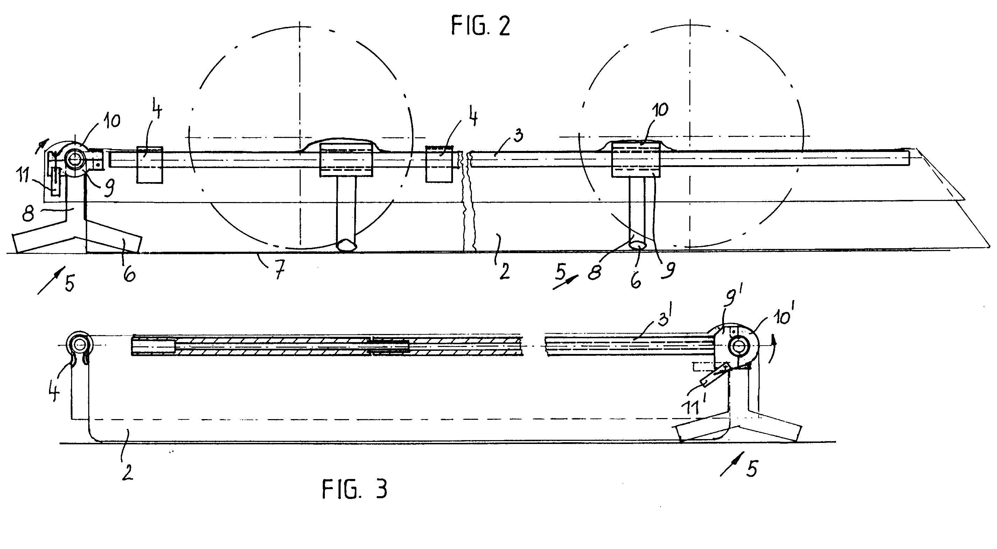

Aus Fig. 2 ist ersichtlich, daß die Ständer 5 etwa ein T-Profil haben, wobei der Balken 6 des 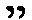 T 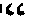 zumindest mit seinen Enden am Erdboden 7 aufliegt. Der Steg 8 des 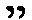 T 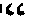 ist mit einem Klemmverschluß versehen, der aus einer fest mit dem Steg 8 verbundenen Halbschale 9, einer aufschwenkbaren Halbschale 10 und einem die beiden Halbschalen 9 und 10 gegeneinander verriegelnden Verschluß 11 besteht. Bei hochgeklappter Halbschale 10 kann daher ein Rohr 3 in die Halbschale 9 gelegt werden, worauf die Halbschale 10 heruntergeklappt und der Verschluß 11 geschlossen wird.

Die Stangen oder Rohre 3 sind, wie aus Fig. 3 ersichtlich ist, dadurch ineinander steckbar, daß ein Ende einen kleineren Außendurchmesser aufweist, der dem Innendurchmesser des anderen Endes entspricht.

In Fig. 3 rechts ist ein Endrohr 3' dargestellt, das an einem Ende eine Klemme ähnlich der Klemme der Ständer 5 aufweist. Mittels der festen Halbschale 9', der demgegenüber schwenkbaren Halbschale 10' und dem Verschluß 11' kann ein quer zum Rohr 3' verlaufendes Rohr befestigt werden.

Die Klemmen 4 bestehen aus einem elastisch verformbaren Rundteil 12 mit zwei Lappen 13. Mittels einer Kette 14, die an einem der Lappen 13 angehängt ist, kann jede Klemme 4 an einem Rohr 3 befestigt werden, sodaß bei der Aufstellung des Rahmens und dem anschließenden Einlegen der Folie die Befestigungsstellen mittels der Klemmen 4 schon eindeutig festgelegt sind. An der Innenseite des Rundteiles 12 ist ein reibungserhöhender Belag 15 aufgebracht, der ein Herausrutschen der Folie 2 wirkungsvoll verhindert.

Bei Verwendung einer oben beschriebenen Einrichtung werden vorerst die Rohre 3 und die Ständer 5 zu einem Rahmen verbunden, wobei die eine Seite dieses Rahmens vorläufig nicht aufgestellt wird. Diese Seite ist in Fig. 2 rechts angedeutet. Anschließend wird von einer Rolle (nicht dargestellt), die vom Ständer 5 gehalten wird, die Kunststoffolie 2 abgezogen, über die Stangen oder Rohre 3 gelegt und mittels der Klemmen 4 befestigt. Nach dem Abschneiden der Folie 2 und dem Entfernen der verbleibenden Rolle kann das Gerät, z.B. der Lastkraftwagen 1, von der noch offenen Seite des Rahmens auf die Folie 2 auffahren. Der Rahmen kann nun auch an der letzten Seite geschlossen und die Folie auf dieser letzten Seite auf die Stangen oder Rohre 3 aufgelegt und mittels der Klemmen 4 befestigt werden.

Nun kann das Gerät gereinigt werden, wobei die Reinigungsflüssigkeit sich in der durch die Folie 2 gebildeten Wanne sammelt. Durch eine nicht dargestellte Pumpe wird diese Flüssigkeit abgesaugt und entsprechend entsorgt.

Nach dem Abschluß der Reinigung und dem völligen Absaugen der Reinigungsflüssigkeit wird die Ausfahrt für das Gerät wieder dadurch freigegeben, daß die eine Seite des Rahmens entfernt wird. Es kann nun ein nächstes Gerät auf die Folie 2 auffahren.

Es hat sich bei Versuchen gezeigt, daß trotz Verwenden einer verhältnismäßig billigen Folie eine weitgehende Sicherheit gegen ein Austreten der Reinigungsflüssigkeit und damit eine Kontaminierung des umgebenden Erdreiches gegeben ist. Selbst bei großen und schweren Geräten, insbesondere auch bei Panzern und Flugzeugen ist, wie die Versuche gezeigt haben, die beschriebene Einrichtung voll einsatzfähig.

## Patentansprüche

1. Verwendung einer Vorrichtung mit einer Wanne mit einem im Abstand vom Erdboden (7) durch Ständer (5) gehaltenen Rahmen aus zusammensteckbaren Stangen oder Rohren (3), über die eine die Wände und den Boden der Wanne bildende, im Bodenbereich am Erdboden (7) aufliegende Kunststoffolie (2) gelegt und daran befestigt ist, als Einrichtung zum Reinigen von kontaminiertem Gerät, z.B. Kraftfahrzeugen, Flugzeugen od.dgl., wobei beim Einfahren des Gerätes (1) der Rahmen (3) vorerst auf einer Seite nicht aufgestellt wird, wobei die Kunststoffolie (2) direkt von einer Rolle abgezogen und auf den Rahmen (3) aufgelegt bzw. in diesen eingelegt wird, sodaß das Gerät (1) ein- und auf die Kunststoffolie (2) auffahren kann, worauf die Wanne durch Aufstellen der letzten Seite des Rahmens (3) und Auflegen der Kunststoffolie (2) geschlossen wird, und ferner die bei der Reinigung anfallende kontaminierte Flüssigkeit mit einer Pumpe in entsprechende Entsorgungsbehälter abgezogen wird.

2. Verwendung nach Anspruch 1, **dadurch gekennzeichnet,** daß die Kunststoffolie (2) mittels federnder Klemmen (4), die an ihrer Innenseite zweckmäßig mit einem reibungserhöhenden Belag (15) versehen sind, an den Stangen oder Rohren (3) befestigt wird.

3. Verwendung nach Anspruch 2, **dadurch gekennzeichnet,** daß die Klemmen (4) mittels eines flexiblen Organes, z.B. einer Kette (14) an vorbestimmten Stellen mit den Stangen oder Rohren (3) verbunden werden.

4. Verwendung nach Anspruch 1, **dadurch gekennzeichnet,** daß die Balken (6) etwa T-förmiger Ständer (5) auf den Boden gestellt und die Stangen oder Rohre (3) durch am Steg (8) des 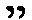 T 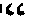 angeordnete Klemmen (9,10,11) befestigt werden.

## Claims

1. Use of a device with a tank with a frame held at a distance from the ground (7) by supports (5) and made from rods or pipes (3), which can be fixed together, over which plastic sheeting (2) is laid, forming the walls and the floor of the tank and lying with the tank floor on the ground (7), and to which the sheeting is attached, as an appliance for cleaning contaminated equipment, e.g. motor vehicles, aircraft or the like, the frame (3) not being erected initially on one side when the equipment drives in, the plastic sheeting (2) being drawn directly from a roll and laid on to or into the frame (3), enabling the equipment (1) to drive into and on to the sheeting, whereupon the tank is closed by erecting the last side of the frame (3) and laying on the plastic sheeting (2), and, in addition, the contaminated liquid arising in the cleaning is drawn off with a pump into corresponding disposal containers.

2. Use according to claim 1,
characterised in that
the plastic sheeting (2) is fastened to the rods or pipes (3) by means of spring clips (4), which are appropriately provided on their inner side with a friction-intensifying coating (15).

3. Use according to claim 2,
characterised in that
the clips (4) are connected to the rods or pipes (3) at predetermined points by means of a flexible part, e.g. a chain (14).

4. Use according to claim 1,
characterised in that the girders (6) of approximately T-shaped supports (5) are placed on the ground and the rods or pipes (3) are fastened by clips (9,10,11) arranged on the crosspiece (8) of the "T".

## Revendications

1. Utilisation comme appareillage de nettoyage d'objets contaminés tels que des véhicules automobiles, des avions ou des engins similaires, d'un dispositif avec une cuve pourvue d'un cadre maintenu au-dessus du sol (17) au moyen de pieds (5) et composé de barres et de tubes (3) pouvant être enfoncés les uns dans les autres et sur lesquels on a posé une feuille de plastique (2) formant les parois et le fond de la cuve et étant en contact avec le sol (7) au niveau de celui-ci, un côté du cadre (3) n'étant pas encore monté lors de la mise en place de l'objet (1), la feuille plastique (2) étant directement prélevée sur un rouleau et posée sur ou dans le cadre (3) de manière à ce que l'objet (1) puisse entrer et rouler sur la feuille plastique (2), le montage du dernier côté du cadre (3) et la pose de la feuille de plastique (2) permettant ensuite de fermer la cuve et le liquide contaminé résultant du nettoyage pouvant enfin être vidé au moyen d'une pompe dans des récipients spéciaux appropriés.

2. Utilisation selon la revendication 1 **caractérisée en ce que** la feuille plastique (2) est fixée aux barres ou tubes (3) au moyen de pinces à ressort (4) pourvues de manière appropriée sur leur face intérieure d'un revêtement (15) augmentant la friction.

3. Utilisation selon la revendication 2 **caractérisée en ce que** les pinces (4) peuvent être reliées aux barres et tubes (3) à des endroits prédéterminés et au moyen d'un organe flexible, une chaîne (14) par exemple.

4. Utilisation selon la revendication 1, **caractérisé en ce que** les poutres (6) des pieds (5), ceux-ci ayant par exemple la forme d'un T, sont posées sur le sol et en ce que les barres et tubes (3) sont fixés par des pinces (9, 10, 11) disposées sur l'âme (8) du "T".
